# EUROPEAN PATENT APPLICATION

(11) **EP 2 957 769 A1**
(43) Date of publication of application: **23.12.2015**
(21) Application number: 15172805.2
(22) Date of filing: 18.06.2015
(51) Int. Cl.: F03D 11/00

(54) **WIND POWER GENERATION PLANT**

(30) Priority: 19.06.2014 JP 2014126043
(71) Applicant: Hitachi, Ltd., Tokyo 100-8280 (JP)
(72) Inventor: FUNABASHI, Shigehisa, Tokyo, 100-8280 (JP); INAMURA, Shingo, Tokyo, 100-8280 (JP); TOBINAGA, Ikuo, Tokyo, 100-8280 (JP)
(74) Representative: MERH-IP Matias Erny Reichl Hoffmann Patentanwälte PartG mbB

(57) **Abstract**

There is provided a wind power generation plant 1 for effectively combining an operation of a unit 18, which is arranged in the wind power generation plant 1 and introduces outside air, and an operation of a dehumidifier 21 to thereby control an air quality at a high efficiency. A wind power generation plant 1 includes a blade 2 which receives wind and is rotated thereby, a generator 7 for generating electric power by the rotation of the blade 2, a nacelle 8 for supporting the blade 2 and for receiving the generator 7, and a tower 9 for supporting the nacelle 8 in such a way that the nacelle 8 can turn. The wind power generation plant 1 has: an outside air introduction unit 18 for introducing outside air; a dehumidifier 21; a temperature sensor 20; a humidity sensor 19; and a controller 12 for holding a temperature threshold value and a relative humidity threshold value. The controller 12 switches between a first operation mode and a second operation mode on the basis of temperature and relative humidity, which are measured in the wind power generation plant 1, and the temperature threshold value and the relative humidity threshold value, the first operation mode activating the dehumidifier 21 and stopping the outside air introduction unit 18, the second operation mode stopping the dehumidifier 21 and activating the outside air introduction unit 18.

## Description

### FIELD OF THE INVENTION

The present invention relates to a wind power generation plant having a mechanism for controlling the temperature and the humidity of air in a nacelle or a tower.

### BACKGROUND OF THE INVENTION

Usually, a wind power generation plant has a construction in which a nacelle for supporting a rotor rotated by blades via a main shaft is arranged in an upper portion of a tower. In many cases, a generator rotated by the rotation of a main shaft of the blades is arranged in the nacelle. In order to acquire a desirable number of revolutions of the generator, there is also a case where a speed increaser is arranged between the rotor and the generator to increase the number of revolutions of the generator. Electric energy generated by the generator is converted into electric power to be supplied to an electric system via a power converter and a transformer.

Units such as the generator, the speed-increasing gear, the power converter, and the transformer are built in the wind power generation plant and generate heat due to the losses of the units. For this reason, the wind power generation plant needs to include a cooling system for radiating the generated heat to thereby operate the units at a suitable temperature. In many cases, the wind power generation plant uses a system using a radiator and a fan in order to finally radiate heat to the atmosphere outside the wind power generation plant or to water.

For example, in Patent Document 1 is described the following construction: that is, a nacelle includes a first fan fixed to a rotary shaft of a rotor and an electric fan (second fan) for introducing outside air into the nacelle; when a generator is operated, the first fan is operated; and when the generator is stopped and humidity in the nacelle is high, the second fan is activated to thereby introduce the outside air.

Further, in Patent Document 2 is disclosed a construction in which a humidity sensor, a humidifier, and a dehumidifier are arranged together with a brush and a slip ring in a casing constructing a generator in a nacelle. The following is described: when humidity in the nacelle is less than a set value, the humidifier is activated; when the humidity in the nacelle is not less than the set value, the dehumidifier is activated; in this way, the humidity in the nacelle is controlled.

### CITATION LIST

### PATENT DOCUMENT

Patent Document 1: JP-A No.2004-301094
Patent Document 2: JP-A No.2013-221416

In a case where outside air is introduced into a wind power generation plant, the control of salinity and humidity contained by the outside air to be introduced is important. In particular, in a wind power generation plant installed offshore, which has been widely installed in recent years, because of an offshore environment, the outside air containing much salinity and much humidity is introduced in many cases. Hence, the much salinity and the much humidity increase the possibility of causing the corrosion of various units in the wind power generation plant.

However, in the construction of Patent Document 1, the electric fan is activated only when the generator is stopped and when the generator is operated and hence temperature in the nacelle is increased, humidity in the nacelle is not measured and the electric fan is not activated. Further, a dehumidifier is not provided either. Hence, it is difficult to control an air quality such as humidity and temperature while the generator is operated.

Further, in the construction of Patent Document 2, the control of humidity in the generator can be performed but heat generated by introducing outside air to thereby ventilate and cool the generator and by operating a dehumidifier is not taken into account. Hence, it is difficult to control an air quality such as humidity andtemperature while the generator is operated.

The present invention is to provide a wind power generation plant capable of controlling an air quality at high efficiency by operating a unit for introducing outside air and a dehumidifier, which are arranged in the wind power generation plant, in an effective combination.

### SUMMARY OF THE INVENTION

In order to solve the problems described above, the present invention is a wind power generation plant including: a blade that receives wind and is rotated thereby; a generator for generating electric power by the rotation of the blade; a nacelle for supporting the blade and for receiving the generator; and a tower for supporting the nacelle in such a way that the nacelle can turn. The wind power generation plant is characterized by including: an outside air introduction unit for introducing outside air; a dehumidifier; a temperature sensor; a humidity sensor for measuring a relative humidity; and/or a controller for holding a temperature threshold value and a relative humidity threshold value which are set in advance. The controller may switch between a first operation mode and a second operation mode on the basis of temperature and relative humidity, which are measured in the wind power generation plant, and the temperature threshold value and the relative humidity threshold value, the first operation mode activating the dehumidifier or subjecting the dehumidifier to a high function operation and stopping the outside air introduction unit or subjecting the outside air introduction unit to a low function operation, the second operation mode stopping the dehumidifier or subjecting the dehumidifier to the low function operation and activating the outside air introduction unit or subjecting the outside air introduction unit to the high function operation.

According to the present invention, a humidity control and a temperature control in the wind power generation plant can be efficiently performed and the corrosion risk of units arranged in the wind power generation plant can be inhibited.

Further, for example, by operating the unit for introducing outside air into the wind power generation plant and the dehumidifier in an efficient combination, a power consumption can be reduced and a wind power generation plant of high reliability can be implemented.

Problems, constructions, and effects other than those described above will be made clearer by the description of the following embodiment.

### BRIEF DESCRIPTION OF THE DRAWINGS

Fig. 1 is a general schematic view of a wind power generation plant of an embodiment 1 relating to an embodiment of the present invention.
Fig. 2 is a schematic longitudinal section view of a nacelle part of the wind power generation plant shown in Fig. 1.
Fig. 3 is a section view taken on a line A - A of the nacelle part shown in Fig. 2.
Fig. 4 is a function block diagram of a controller shown in Fig. 2.
Fig. 5 is a map to show an operation range of a dehumidifier and an outside air introduction unit of the windpower generation plant of the embodiment 1.
Fig. 6 is a flow chart of an operation control of the dehumidifier and the outside air introduction unit of the wind power generation plant of the embodiment 1.
Fig. 7 is a flow chart of an operation control including an operation of limiting a power output of the wind power generation plant of the embodiment 1.
Fig. 8 is a map to show an operation range of a dehumidifier and an outside air introduction unit of a wind power generation plant of an embodiment 2 relating to other embodiment of the present invention.
Fig. 9 is a flow chart of an operation control of the dehumidifier and the outside air introduction unit of the wind power generation plant of the embodiment 2.
Fig. 10 is a flow chart of an operation control of a dehumidifier and an outside air introduction unit of a wind power generation plant of an embodiment 3 relating to other embodiment of the present invention.
Fig. 11 is a schematic longitudinal section view of a tower part of a wind power generation plant of an embodiment 4 relating to other embodiment of the present invention.
Fig. 12 is a schematic longitudinal section view of a tower part of a wind power generation plant of an embodiment 5 relating to other embodiment of the present invention.

### DETAILED DESCRIPTION OF THE PREFERRED EMBODIMENTS

In the present specification, a case where a wind power generation plant according to an embodiment of the present invention is installed offshore will be described by way of example. However, the present invention can be applied not only to this case but also to a case where the wind power generation plant is installed in any area, for example, a plain region in a mountainous area or an inland area in the same way. Further, a wind power generation plant of a down-wind type will be described by way of example in the following, but the present invention can be applied also to a wind power generation plant of an up-wind type in the same way.

Hereinafter, an embodiment of the present invention will be described by the use of drawings.

### (Embodiment 1)

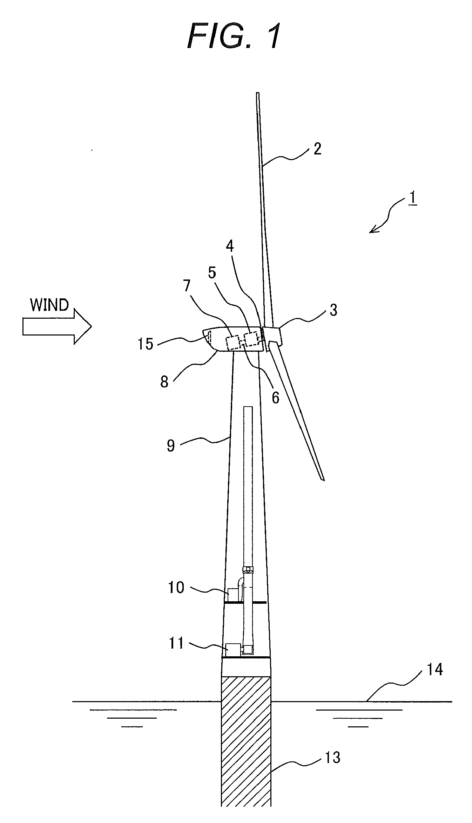

A general schematic view of a wind power generation plant of an embodiment 1 will be shown in Fig. 1. As shown in Fig. 1, a wind power generation plant 1 has its nacelle 8 arranged on a top portion of a tower 9 installed on a foundation 13 in such a way as to protrude offshore from under a sea level 14. The nacelle 8 rotatably supports a shaft of a rotor 3 which has blades 2 and a hub (not shown in the drawing). The rotor 3 is connected to a generator 7 via a main shaft 4, a speed-increasing gear 5, and a high-speed shaft 6 (an output shaft of the speed-increasing gear 5). The generator 7 is electrically connected to electric parts such as a power converter 10 and a transformer 11, which are housed in the lower portion of the tower 9, by a power cable (not shown in the drawing) . The speed-increasing gear 5 has a plurality of gears and increases a turning angle velocity of the main shaft 4 by a gear ratio and transmits the turning angle velocity after being increased to the generator 7.

The wind power generation plant 1 is awindpower generation plant of a down-wind type, so the nacelle 8 is turned in such a way as to direct a rotation face of the rotor 3 leeward (yaw control) and the blades 2 receive a force from the energy of the wind, whereby the rotor 3 is rotated. The rotation of the rotor 3 is increased to the number of revolutions suitable for the generator 7 via the speed-increasing gear 5 and the high-speed shaft 6 and is transmitted to the generator 7. An electric energy generated by the rotation of the generator 7 is rectified by a power converter 10 and has voltage regulated by the transformer 11 and is sent to a power system (not shown in the drawing). At this time, the generator 7, the power converter 10, and the transformer 11 produce heat due to a loss caused when current flows. Further, the speed-increasing gear 5 also produces heat due to its loss. Then, the wind power generation plant 1 uses a cooling water mixed with an antifreeze solution as a cooling medium made (refrigerant) so as to cool the generator 7 and the speed-increasing gear 5 and has a radiator 15 for introducing the cooling water. The radiator 15 is supported by and set on an inner wall of the nacelle 8.

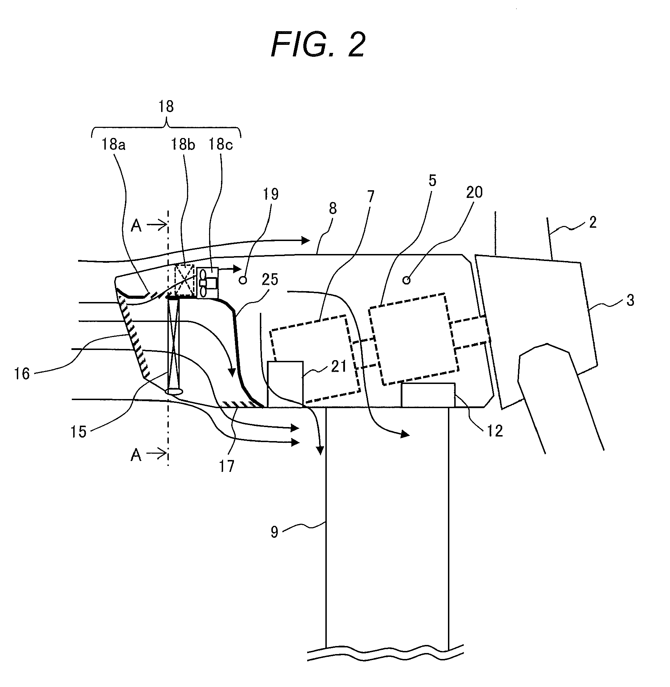

A schematic longitudinal section view of the nacelle 8 of the wind power generation plant 1 shown in Fig. 1 will be shown in Fig. 2. In Fig. 2, the flow of wind will be shown by arrows. As shown in Fig. 2, the wind blows from the left side to the right side and the nacelle 8 receives the wind from a side opposite to a side in which the blades 2 are set. That is, the wind power generation plant 1 of the present embodiment 1 is of a down-wind type in which the blades 2 are positioned on the downstream side of the tower 9. On the windward side of the nacelle 8, the radiator 15 is arranged in such a way that its suction face is directed in a windward direction. The radiator 15 has the following construction: that is, the cooling water, which absorbs heat stored in the generator 7, the speed-increasing gear 5, or the nacelle 8 to thereby cool these parts and to be brought into high temperature by the heat absorbed, flows into the radiator 15 and radiates the heat to the outside air. On the windward side of the radiator 15 is formed a radiator air inlet 16 opened in such a way as to directly receive natural wind (outside air). In Fig. 2, a range of the radiator air inlet 16 will be shown by oblique lines. Further, on the leeward side of the radiator 15, a first passage is formed in such a way as to guide the flow of the air passing through the radiator 15 to the down side of the nacelle 8 and a radiator air outlet 17, which is an outlet of the first passage for making the air passing through the radiator 15 to the down side of the nacelle 8, is formed. The radiator 15 is arranged in such a way as to face the wind flowing in (arranged in such a way as to oppose the radiator air inlet 16) and the wind passing through the clearances of the fins of the radiator 15 is introduced into the radiator air outlet 17. In Fig. 2, a range of the radiator air outlet 17 will be shown by oblique lines. The first passage for guiding the outside air to the radiator air inlet 16, the radiator 15, and the radiator air outlet 17 is formed of a passage wall 25. The passage wall 25 prevents the outside air passing through the radiator 15 from entering the interior of the nacelle 8.

Further, as shown in Fig. 2, the passage wall 25 has an outside air introduction port 18a formed therein on the upstream side of the radiator 15 arranged on the windward side of the nacelle 8, the outside air introduction port 18a introducing the outside air into the nacelle 8 to ventilate the nacelle 8. Further, the passage wall 25 has a salt damage prevention filter 18b and a first electric fan 18c arranged on the rear side of the outside air introduction port 18a, the salt damage prevention filter 18b removing salinity from the introduced outside air. The outside air introduction port 18a, the salt damage prevention filter 18b, and the first electric fan 18c construct an outside air introduction unit 18. Here, the outside air introduction port 18a is constructed of, for example, a movable flap and has a flap opening regulated or opened/ closed electrically by a control signal from a controller 12 which will be described later.

The generator 7 and the speed-increasing gear 5, which are arranged in the nacelle 8, are cooled via the radiator 15. However, heat is radiated from the surfaces of the generator 7 and the speed-increasing gear 5 and heat is radiated from a bearing and the other electric parts (controller 12 and the like), which causes to increase an ambient temperature in the nacelle 8. In order to reduce the ambient temperature in the nacelle 8, it is effective to introduce the outside air of low temperature into the nacelle 8 to thereby accelerate to ventilate the nacelle 8. To forcibly introduce air cleaned via the salt damage prevention filter 18b for removing the salinity to thereby form an air flow results in increasing a static pressure in the nacelle 8, which hence makes it promising to produce an unintended effect of preventing the outside air, which is not yet cleaned, from entering the nacelle 8 from the small clearances of the nacelle 8.

Further, in the nacelle 8 are arranged a humidity sensor 19 for measuring a relative humidity of air in the nacelle 8, a temperature sensor 20 for sensing a temperature in the nacelle 8, a dehumidifier 21 for dehumidifying the air in the nacelle 8, and a controller 12 for controlling the dehumidifier 21 and the outside air introduction unit 18. In Fig. 2, a signal cable from the controller 12 will be omitted. As the dehumidifier 21 is used, for example, a heat pump and when the dehumidifier 21 is operated, heat is dissipated. Hence, as will be described later, there is a trade-off relationship between the ventilation and cooling of the nacelle 8 performed by the outside air introduction unit 18 and the dehumidification of the nacelle 8 performed by the dehumidifier 21. Hence, it is necessary to optimally control the outside air introduction unit 18 and the dehumidifier 21 by the controller 12. In this regard, it is also possible to provide the salt damage prevention filter 18b constructing the outside air introduction unit 18 with a function of removing humidity. However, in a case where the interior of the nacelle 8 is in a comparatively high humidity and an outside air temperature becomes lower, when the surface temperature of the part such as the generator 7, which is in contact with the air in the nacelle 8, becomes lower, it is thought that a dew condensation is caused. Hence, there is provided the dehumidifier 21 capable of regulating not only the humidity of the introduced outside air but also the humidity of the air in the nacelle 8.

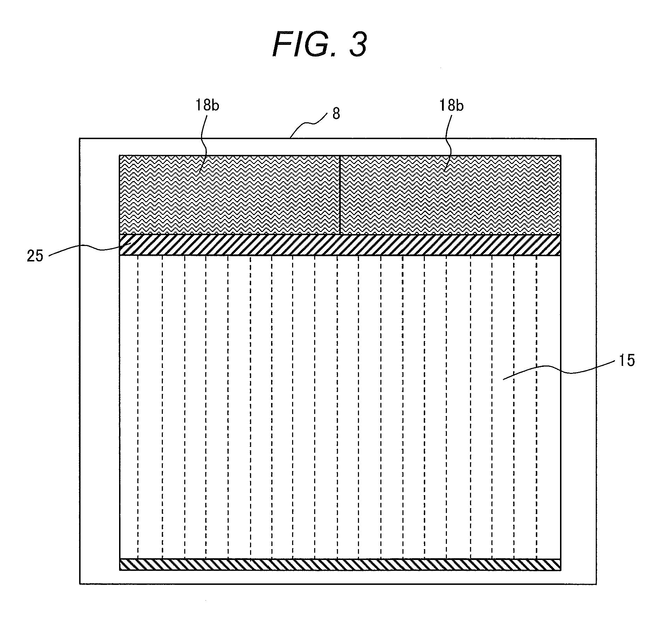

Here, a section view taken on a line A - A of the nacelle 8 shown in Fig. 2 will be shown in Fig. 3. As shown in Fig. 3, in the nacelle 8 are arranged the radiator 15, whose upper end portion is supported by the passage wall 25 for forming the first passage, and two salt damage prevention filters 18b which is arranged on the passage wall 25. All of the outside air flowing in from the movable flaps forming the outside air introduction port 18a is introduced into the salt damage prevention filters 18b. That is, the passage wall 25 forms the first passage in which: the outside air flows in from the radiator air inlet 16; passes through the radiator 15; and flows to the radiator air outlet 17 and a second passage in which: the outside air flows in from the outside air introduction port 18a; has salinity removed via the salt damage prevention filter 18b and the first electric fan 18c; and flows into the nacelle 8. Further, both side faces, which are opposite to the inner wall faces of the nacelle 8, of the two salt damage prevention filters 18b have clearances (not shown in the drawing) used for replacing a filter. However, the outside air flowing from the outside air introduction port 18a via the clearances used for replacing a filter does not directly flow into the nacelle 8.

The controller 12 shown in Fig. 2 is constructed of a ROM for storing various kinds of programs, a memory such as a RAM or an external storage device for temporarily storing the result of execution of the various kinds of programs or the data of an operation process, and a processor such as a CPU for reading out and executing the programs stored in the ROM.

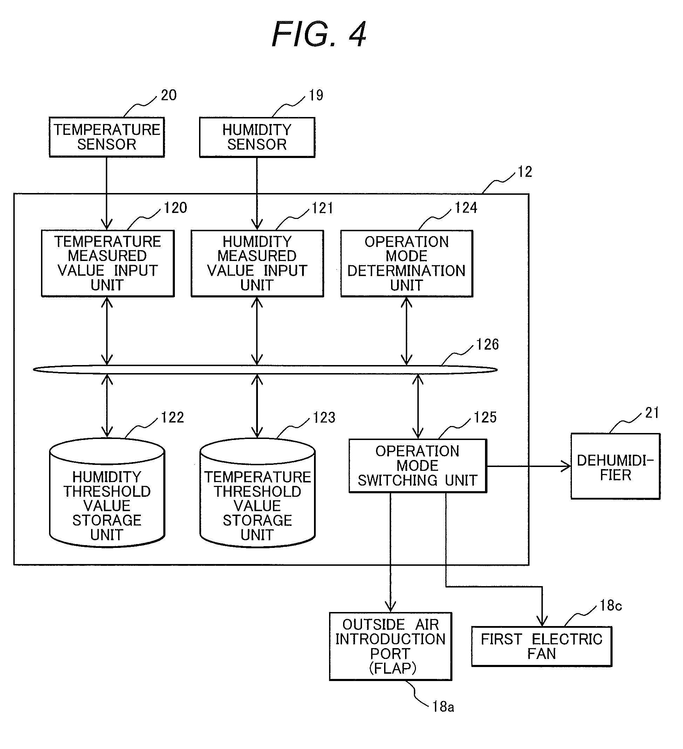

Fig. 4 shows a function block diagram of the controller 12 shown in Fig. 2. The controller 12 includes a temperature measured value input unit 120 for inputting the temperature in the nacelle 8, which is measured by the temperature sensor 20, a humidity measured value input unit 121 for inputting the humidity in the nacelle 8, which is measured by the humidity sensor 19, a humidity threshold value storage unit 122 for storing a humidity threshold value set in advance and supplied to the determination of an operation mode, which will be described later, and a temperature threshold value storage unit 123 for storing a temperature threshold value set in advance and supplied to the determination of the operation mode, which will be described later. Further, the controller 12 includes an operation mode determination unit 124 for comparing the temperature in the nacelle 8 read out of the temperature measured value input unit 120 via an internal bus 126 with a temperature threshold value stored in the temperature threshold value storage unit 123 and similarly for comparing the relative humidity in the nacelle 8 read out of the humidity measured value input unit 121 via the internal bus 126 with a humidity threshold value stored in the humidity threshold value storage unit 122 to thereby determine an operation mode of the outside air introduction unit 18 and the dehumidifier 21. Still further, the controller 12 includes an operation mode switching unit 125 for outputting an operation command of an opening of the movable flap constructing the outside air introduction port 18a or of opening/ closing the movable flap and an operation command to the first electric fan 18c and the dehumidifier 21 in correspondence to the operation mode determined by the operation mode determination unit 124.

Hereinafter, an operation control of the outside air introduction unit 18 and the dehumidifier 21 by the controller 12 will be specifically described. As described above, one of the functions of the outside air introduction unit 18 is to ventilate and to cool the interior of the nacelle 8. However, if the outside air is blindly introduced into the nacelle 8, there are produced a demerit of shortening the life of the salt damage prevention filter 18b and a demerit of increasing power consumed by the first electric fan 18c, and in addition, ademerit of excessively introducing air (outside air) of high humidity, which contains large amount of moisture, into the nacelle 8. Further, the function of the dehumidifier 21 is to reduce the humidity in the nacelle 8. On the other hand, when the dehumidifier 21 is operated, the dehumidifier 21 produces heat and hence causes an increase in the temperature in the nacelle 8. In this way, each of the outside air introduction unit 18 and the dehumidifier 21 has the demerit of impairing each function. Hence, in a case where both of the outside air introduction unit 18 and the dehumidifier 21 are operated at the same time, the effects produced by them is inhibited as compared with a case where each of them is individually operated, which results in increasing power consumed by the auxiliary parts (the outside air introduction unit 18 and the dehumidifier 21) in comparison to the effects produced by the auxiliary parts.

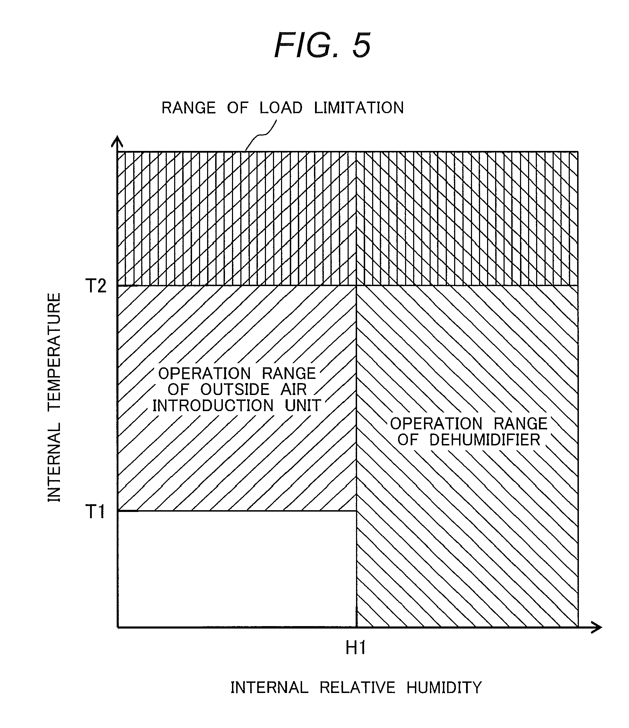

In this point of view, in the present embodiment, the outside air introduction unit 18 and the dehumidifier 21 are operated by a method shown in Fig. 5 to Fig. 7 and the output of the wind power generation plant 1 is limited, whereby the temperature and the humidity in the nacelle 8 are efficiently held in an optimal state.

An operation map relating to the outside air introduction unit 18, the dehumidifier 21, and the limitation of output of the wind power generation plant 1 will be shown in Fig. 5. A horizontal axis shows a measured relative humidity in the nacelle 8 and a vertical axis shows a measured temperature in the nacelle 8 and the operation ranges of the outside air introduction unit 18 and the dehumidifier 21 are shown by areas hatched by oblique lines or vertical lines. That is, in a case where the relative humidity H in the nacelle 8 is not less than a relative humidity H1 of a humidity threshold value which is set in advance, the dehumidifier 21 is operated and the outside air introduction unit 18 is stopped. Contrarily, in a case where the relative humidity H in the nacelle 8 is less than the relative humidity H1, the dehumidifier 21 is stopped and the outside air introduction unit 18 is operated. Further, in a case where a temperature T in the nacelle 8 is not less than a temperature T1 of a first temperature threshold value which is set in advance, the outside air introduction unit 18 is operated, whereas in a case where the temperature T is less than the temperature T1, the outside air introduction unit 18 is stopped. Further, a temperature T2 of a second temperature threshold value higher than the temperature T1 of the first temperature threshold value is set in advance and in a case where the temperature T in the nacelle 8 is not less than the second temperature threshold value T2, the wind power generation plant 1 is operated in such a way as to limit its output to a value lower than power to be generated by the state of the present wind (load limitation) .

Here, the relative humidity H1 of the humidity threshold value for determining whether the dehumidifier 21 is operated or stopped is set preferably within a range from 50 % to 60 % and may be set within a range from 40 % to 60 % in terms of inhibiting a corrosion risk of parts and in terms of inhibiting power consumed by an excessive dehumidifying operation. Further, it is natural that the temperature T1 of the first temperature threshold value for determining whether the outside air introduction unit 18 is operated or stopped is higher than a maximum temperature of the outside air that can be normally thought. The temperature T1 is preferably set within a range from 40 °C to 50 °C and may be set within a range from 35 °C to 50 °C in consideration of a viewpoint of guaranteeing the operation of the parts arranged in the nacelle 8 and a viewpoint of avoiding salinity and moisture from being introduced by excessively introducing the outside air and of inhibiting a power consumption. Further, it is desired that the second temperature threshold value T2 of a determination criteria of limiting the output of the wind power generation plant 1 is set within a range from 50 °C to 55 °C. In this regard, the relative humidity H1 as the humidity threshold value, the first temperature threshold value T1, and the second temperature threshold value T2 may set as appropriate according to an environment in which the wind power generation plant 1 is installed.

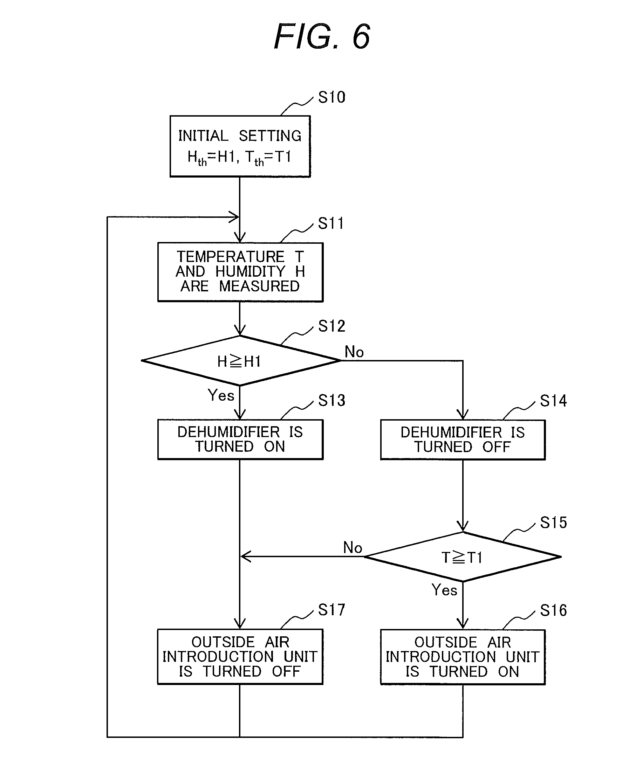

Next, a flow chart to show an operation control of the dehumidifier 21 and the outside air introduction unit 18 of the wind power generation plant 1 will be shown in Fig. 6.

First, an initial setting is performed: that is, the relative humidity H1 is set as a humidity threshold value Hₜₕ and the temperature T1 is set as a first temperature threshold value Tₜₕ (step S10). The set relative humidity H1 is stored in the humidity threshold value storage unit 122 constructing the controller 12. Further, the first temperature threshold value T1 is stored in the temperature threshold value storage unit 123 constructing the controller 12.

Subsequently, a temperature T in the nacelle 8 is measured by the temperature sensor 20 and a relative humidity H in the nacelle 8 is measured by the humidity sensor 19 (step S11). The measured temperature T and the measured relative humidity H are taken in the controller 12 by the temperature measured value input unit 120 and the humidity measured value input unit 121, respectively. The operation mode determination unit 124 constructing the controller 12 reads out the relative humidity H1 from the humidity threshold value storage unit 122 via the internal bus 126 and compares the relative humidity H1 with the relative humidity H taken in by the humidity measured value input unit 121 (step S12). As the result of comparison, in a case where the measured relative humidity H is not less than the relative humidity H1 of the humidity threshold value, the operation mode switching unit 125 outputs an activation command as an operation command to the dehumidifier 21 (turning on the dehumidifier 21) (step S13). Further, the operation mode switching unit 125 outputs a stop command as an operation command to the outside air introduction unit 18 (turning off the outside air introduction unit 18) (step S17). Then, the flow returns to step S11.

As the result of comparison result by the operation mode determination unit 124 in step S12, in a case where the measured relative humidity H is less than the relative humidity H1 of the humidity threshold value, the operation mode switching unit 125 outputs a stop command as an operation command to the dehumidifier 21 (turning off the dehumidifier 21) (step S14) and then the flow proceeds to step S15. In step S15, the operation mode determination unit 124 reads out the first temperature threshold value T1 from the temperature threshold value storage unit 123 via the internal bus 126 and compares the first temperature threshold value T1 with the temperature T taken in by the temperature measured value input unit 120 (step S15). As the result of comparison, in a case where the measured temperature T is not less than the first temperature threshold value T1, the operation mode switching unit 125 outputs an activation command as an operation command to the outside air introduction unit 18 (turning on the outside air introduction unit 18) (step S16) and then the flow returns to step S11. As the result of comparison by the operation mode determination part 124 in step S15, in a case where the measured temperature T is less than the first temperature threshold value T1, the flow proceeds to step S17 where the operation mode switching unit 125 outputs a stop command to the outside air introduction unit 18 (turning off the outside air introduction unit 18) and then the flow returns to step S11. As described above, the controller 12 switches between a first operation mode of activating the dehumidifier 21 and stopping the outside air introduction unit 18 and a second operation mode of stopping the dehumidifier 21 and activating the outside air introduction unit 18 on the basis of the relative humidity and the temperature in the nacelle 8.

In this regard, in the present embodiment, the control of the humidity in the nacelle 8 is preferentially performed, so in an initial processing of comparing a measured value with a threshold value, the operation mode determination unit 124 compares the relative humidity H, which is measured, with the threshold value H1.

In Fig. 6 has been described an example in which the operation commands outputted to the dehumidifier 21 and the outside air introduction unit 18 from the controller 12 are two operation commands of "the activation command" and "the stop command". However, the operation command is not limited to "the activation command" and "the stop command". For example, "the activation command" may be "a high function operation" of what we call "a rated operation" or "a strong operation", whereas "the stop command" may be "a low function operation" of what we call "a limited operation" or "a weak operation". Here, "the strong operation" means, for example, an operation of approximately 70 % to 100 % of a rated value and "the weak operation" means, for example, an operation less than approximately 50 % of the rated value.

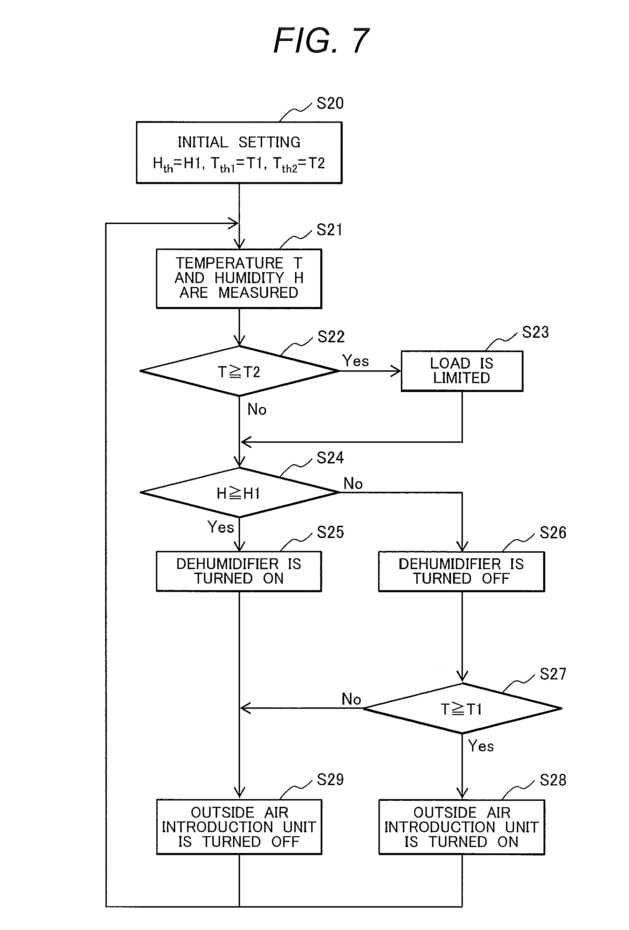

Next, a flow chart of an operation control including a power output limiting operation will be shown in Fig. 7. First, an initial setting is performed: that is, the relative humidity H1 is set as the humidity threshold value Hₜₕ and the temperature T1 is set as a first temperature threshold value Tₜₕ₁ and a temperature T2 is set as a second temperature threshold value Tₜₕ₂ (step S20). Here, as described above in Fig. 5, an inequality of "the temperature T2 > the temperature T1 holds. The set relative humidity H1 is stored in the humidity threshold value storage unit 122 constructing the controller 12. Further, the set first temperature threshold value T1 and the set second temperature threshold value T2 are stored in the temperature threshold value storage unit 123.

Subsequently, the temperature T in the nacelle 8 is measured by the temperature sensor 20 and the relative humidity H in the nacelle 8 is measured by the humidity sensor 19 (step S21). The measured temperature T and the measured relative humidity H are taken in the controller 12 by the temperature measured value input unit 120 and the humidity measured value input unit 121, respectively. In step S22, the operation mode determination unit 124 reads out the second temperature threshold value T2 from the temperature threshold value storage unit 123 via the internal bus 126 and compares the second temperature threshold value T2 with the temperature T taken in by the temperature measured value input unit 120 (step S22) . As the result of comparison, in a case where the measured temperature T is not less than the second temperature threshold value T2, the operation mode switching unit 125 limits the power output or load itself of the wind power generation plant 1 (degenerated operation) (step S23). In this regard, the limitation of the power output or load of the wind power generation plant 1 is implemented, for example, by regulating a pitch angle of the blades 2 to reduce an area receiving the wind by the blades 2 to thereby reduce the rotational speed of the blades 2. By inhibiting the amount of heat generated by the generator 7 and the speed-increasing gear 5 by limiting the power output or load in step S23, an increase in the temperature in the nacelle 8 can be inhibited. As the result of comparison by the operation mode determination unit 124 in step S22, in a case where the measured temperature T is less than the second temperature threshold value T2, the power output or load is not limited and the flow proceeds to step S24.

Next, the operation mode determination unit 124 reads out the relative humidity H1 from the humidity threshold value storage unit 122 via the internal bus 126 and compares the relative humidity H1 with the relative humidity H taken in the controller 12 by the humidity measured value input unit 121 (step S24). As the result of comparison, in a case where the relative humidity H, which is measured, is not less than the relative humidity H1 of the humidity threshold value, the operation mode switching unit 125 outputs an activation command to the dehumidifier 21 (turning on the dehumidifier 21) (step S25). Further, the operation mode switching unit 125 outputs a stop command to the outside air introduction unit 18 (turning off the outside air introduction unit 18) (step S29). Then, the flow returns to step S21.

As the result of comparison by the operation mode determination unit 124 in step S24, in a case where the relative humidity H, which is measured, is less than the relative humidity H1, the operation mode switching unit 125 outputs a stop command to the dehumidifier 21 (turning off the dehumidifier 21) (step S26) and then the flow proceeds to step S27. The operation mode determination unit 124 reads out the first temperature threshold value T1 from the temperature threshold value storage unit 123 and compares the first temperature threshold value T1 with the temperature T, which is measured (step S27). As the result of comparison, in a case where the temperature T, which is measured, is not less than the first temperature threshold value T1, the operation mode switching unit 125 outputs an activation command to the outside air introduction unit 18 (turning on the outside air introduction unit 18) (step S28) and then the flow returns to step S21. As the result of comparison by the operation mode determination unit 124 in step S27, in a case where the temperature T, which is measured, is less than the first temperature threshold value T1, the flow proceeds to step S29 where the operation mode switching unit 125 outputs a stop command to the outside air introduction unit 18 (turning off the outside air introduction unit 18) and then the flow returns to step S21.

As described above, the controller 12 switches among a first operation mode of activating the dehumidifier 21 and stopping the outside air introduction unit 18, a second operation mode of stopping the dehumidifier 21 and activating the outside air introduction unit 18, and the limitation of the power output of the wind power generation plant 1 on the basis of the relative humidity and the temperature in the nacelle 8.

Here, returning to Fig. 2, the arrangement of the humidity sensor 19, the temperature sensor 20, and the dehumidifier 21 will be described. As shown in Fig. 2, the outside air flows in the nacelle 8 via the outside air introduction port 18a, the salt damage prevention filter 18b, and the first electric fan 18c, which are arranged on the upstream side of the nacelle 8. Thereafter, the air flows through the humidity sensor 19, the dehumidifier 21, the generator 7, the speed-increasing gear 5, and the temperature sensor 20 in this order and then flows out of the nacelle 8. In Fig, 2, the air flowing on an outer surface of the dehumidifier 21 flows out of the nacelle 8 via a clearance between the nacelle 8 and the tower 9. Further, the air flowing into the tower 9 flows out of the tower 9 via an air outlet (not shown in Fig. 2) formed in the tower 9.

The temperature and the humidity of the air in the nacelle 8 are spatially distributed, so that the temperature and the humidity of the air in the nacelle 8 need to be measured at places suitable for a purpose of using the temperature and the humidity for the operation control of the dehumidifier 21 and the outside air introduction unit 18.

As for the measurement of the humidity, in order to avoid a corrosion risk of the unit arranged in the nacelle 8, it is recommended to measure the humidity at a place where the humidity is comparatively high. Further, when the temperature of the air in the nacelle 8 is increased, the relative humidity is decreased, so that it is desired to measure the humidity at a place where the temperature is low, whereby a more accurate determination of the operation mode can be made. For this reason, it is recommended to measure the humidity of the air by the humidity sensor 19 on the upstream side in the flow of the air in the nacelle 8, and in particular, it is desired that the humidity sensor 19 is arranged on the upstream side of the dehumidifier 21 which is an object to be controlled. Further, the dehumidifier 21 supplies the air, which is dehumidified to a low humidity, to the generator 7 or the controller 12 which is subject to a corrosion risk, so that it is desired that the dehumidifier 21 is arranged on the upstream side of the generator 7 or the controller 12 with respect to the flow of the air in the nacelle 8.

On the other hand, as for the measurement of the temperature, in order to avoid high temperature in the nacelle 8, it is recommended to measure the temperature at a place where the temperature is comparatively high. For this reason, it is desired that the temperature sensor 20 is arranged on a downstream side of the unit such as the generator 7 or the controller 12, which has a property of a heating element, whereby a more accurate determination of the operation mode can be made.

In other words, it is an optimum arrangement that the humidity sensor 19, the dehumidifier 21, the generator 7 or the controller 12, and the temperature sensor 20 are arranged in this order with respect to the flow of the air.

According to the present embodiment, by performing the operation control of the dehumidifier 21 and the outside air introduction unit 18, shown in Fig. 6, that is, by switching between the first operation mode and the second operation mode on the basis of the relative humidity and the temperature in the nacelle 8, which are measured, it is possible to efficiently perform a humidity control and a temperature control in the wind power generation plant 1. Further, it is possible to inhibit the corrosion risk of the units arranged in the wind power generation plant 1.

Further, according to the present embodiment, as shown in Fig. 7, not only by performing the operation control of the dehumidifier 21 and the outside air introduction unit 18 but also by limiting the power output or the load, the amount of heat generated by the generator 7 and the speed-increasing gear 5 can be inhibited, which hence can inhibit the temperature in the nacelle 8 from being increased. In this way, it is possible to reduce the power consumed by the dehumidifier 21 and the outside air introduction unit 18 and to implement a wind power generation plant of high reliability.

In this regard, the limitation of the power output or the load is not always required, but when the limitation of the power output or the load is added to the operation control, it is possible to achieve an additional effect of reducing a power consumption.

### [Embodiment 2]

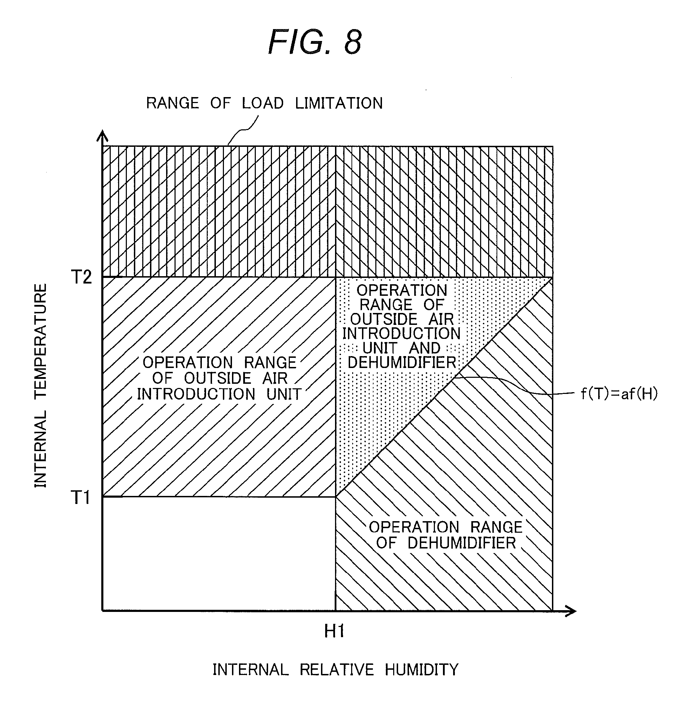

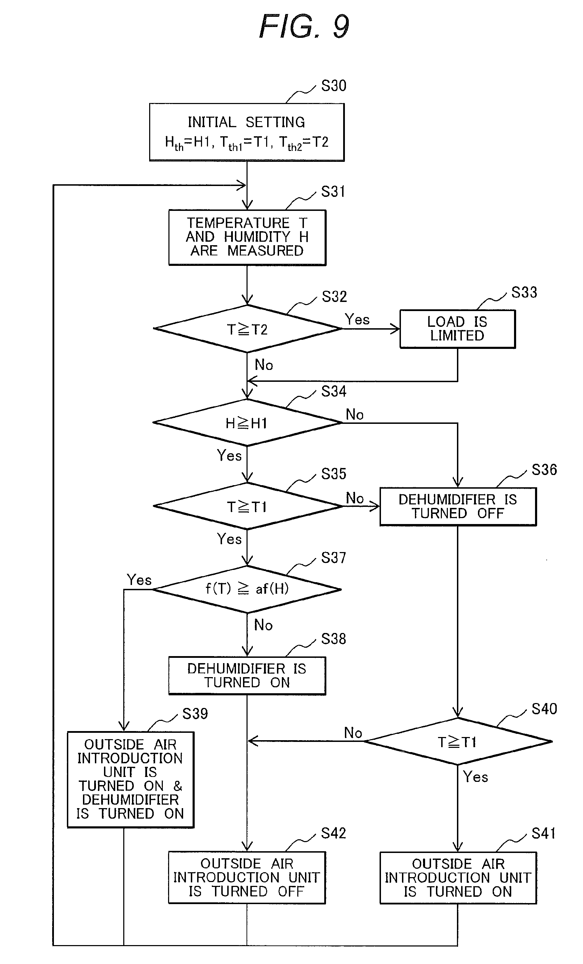

An operation map of a dehumidifier and an outside air introduction unit of a wind power generation plant of an embodiment 2 of another embodiment of the present invention will be shown in Fig. 8. An operation control flow of the dehumidifier and the outside air introduction unit in the wind power generation plant of the embodiment 2 will be shown in Fig. 9. The present embodiment is different from the embodiment 1 in that an operation control region in which both of the dehumidifier and the outside air introduction unit are operated is made in the range of the relative humidity and the temperature in a nacelle. Other structures, that is, structures of a wind power generation plant 1 and a nacelle 8 are the same as the structures shown in Fig. 1 to Fig. 4 and hence their descriptions will be omitted in the following.

An operation map relating to an outside air introduction unit 18, a dehumidifier 21, and load limitation of the output of the wind power generation plant 1 will be shown in Fig. 8. A horizontal axis shows a measured relative humidity in the nacelle 8 and a vertical axis shows a measured temperature in the nacelle 8 and the operation ranges of the outside air introduction unit 18 and the dehumidifier 21 are shown by areas hatched by oblique lines, vertical lines, or dots. That is, in a case where a temperature T in the nacelle 8 is less than a second temperature threshold value T2, which is higher than a first temperature threshold value T1 set in advance, and where a relative humidity H in the nacelle 8 is less than a relative humidity H1 of a humidity threshold value set in advance, a dehumidifier 21 is stopped and an outside air introduction unit 18 is operated.

Further, in a case where the temperature T in the nacelle 8 is less than the second temperature threshold value T2, which is higher than the first temperature threshold value T1, and where the relative humidity H in the nacelle 8 is not less than the relative humidity H1 of the humidity threshold value, as shown in Fig. 8, an operation control of the dehumidifier 21 and the outside air introduction unit 18 is different in ranges separated by a boundary defined by a function of f (T) = a × f (H) . That is, in a range where f (T) ≥ a × f(H), both of the dehumidifier 21 and the outside air introduction unit 18 are operated, whereas in a range where f (T) < a × f(H), the dehumidifier 21 is operated and the outside air introduction unit 18 is stopped. Here, in a range where the temperature T in the nacelle 8 is less than the first temperature threshold value T1 and where the relative humidity H in the nacelle 8 is not less than the relative humidity H1 of the humidity threshold value, the dehumidifier 21 is operated and the outside air introduction unit 18 is stopped. Further, in a range where the temperature T in the nacelle 8 is less than the first temperature threshold value T1 and where the relative humidity H in the nacelle 8 is less than the relative humidity H1 of the humidity threshold value, both of the dehumidifier 21 and the outside air introduction unit 18 are stopped.

In a range where the temperature T in the nacelle 8 is not less than the second temperature threshold value T2, irrespective of the relative humidity H in the nacelle 8, the output of the wind power generation plant 1 is limited to a level lower than power generated in the present state of the wind (load limitation).

In this regard, the relative humidity H1 of the humidity threshold value, as is the case with the embodiment 1, is desirably set within a range from 50 % to 60 % and may be set in a range from 40 % to 60 % in terms of inhibiting the corrosion risk of the units and in terms of inhibiting power consumed by an excessive dehumidifying operation,. Further, the first temperature threshold value T1, as is the case with the embodiment 1, is desirably set within a range from 40 °C to 50 °C and may be set in a range from 35 °C to 50 °C. The second temperature threshold value T2, as is the case with the embodiment 1, is desirably set within a range from 50 °C to 55 °C. However, depending on an environment in which the wind power generation plant 1 is installed, there exist various environments of high temperature and high humidity or of low temperature and low humidity, so that it is recommended that the relative humidity H1 as the humidity threshold value, the first temperature threshold value T1, and the second temperature threshold value T2 are appropriately set in consideration of the state of the environment in which the wind power generation plant 1 is installed.

Here, the function of f (T) = a × f (H) is stored in either a humidity threshold value storage unit 122 or a temperature threshold value storage unit 123 which are shown in Fig. 4. Further, in the present embodiment, the boundary is defined by the function of f (T) = a × f (H) but is not limited to this. For example, the boundary may be defined by a stepped waveform.

Next, an operation control flow of the dehumidifier and the outside air introduction unit in the wind power generation plant of the present embodiment will be shown in Fig. 9. First, an initial setting is performed: that is, the relative humidity H1 is set as a humidity threshold value Hₜₕ; a temperature T1 is set as a first temperature threshold value Tₜₕ₁; and a temperature T2 is set as a second temperature threshold value Tₜₕ₂ (step S30). Here, the first temperature threshold value Tₜₕ₁ and the second temperature threshold value Tₜₕ₂ satisfy a relationship of T2 > T1. The set relative humidity H1 is stored in the humidity threshold value storage unit 122 shown in Fig. 4. The set first temperature threshold value T1 and the set second temperature threshold value T2 are stored in the temperature threshold value storage unit 123. At this time, the function of f (T) = a × f (H) described above is stored in either the humidity threshold value storage unit 122 or the temperature threshold value storage unit 123.

The temperature T in the nacelle 8 is measured by a temperature sensor 20 and the relative humidity H in the nacelle 8 is measured by a humidity sensor 19 (step S31). The measured temperature T and the measured relative humidity H are taken in a controller 12 by a temperature measured value input unit 120 and a humidity measured value input unit 121, respectively. An operation mode determination unit 124 reads out the second temperature threshold value T2 from the temperature threshold value storage unit 123 and compares the second temperature threshold value T2 with the temperature T taken in by the temperature measured value input unit 120 (step S32). As the result of comparison, in a case where the measured temperature T is not less than the second temperature threshold value T2, an operation mode switching unit 125 limits a power output or a load itself of the wind power generation plant 1 (degenerated operation) (step S33). In a case where the measured temperature T is less than the second temperature threshold value T2 in step S33, the power output or the load is not limited and the flow proceeds to step S34.

Next, the operation mode determination unit 124 reads out the relative humidity H1 of the humidity threshold value from the humidity threshold value storage unit 122 via an internal bus 126 and compares the relative humidity H1 with the relative humidity H taken in by the humidity measured value input unit 121 (step S34). As the result of comparison, in a case where the measured relative humidity H is less than the relative humidity H1, the operation mode switching unit 125 outputs a stop command to the dehumidifier 21 (turning off the dehumidifier 21) (step S36).

In a case where the measured relative humidity H is not less than the relative humidity H1, the flow proceeds to step S35. The operation mode determination unit 124 reads out the first temperature threshold value T1 from the temperature threshold value storage unit 123 and compares the first temperature threshold value T1 with the measured temperature T taken in by the temperature measured value input unit 120 (step S35). As the result of comparison, in a case where the measured temperature T is less than the first temperature threshold value T1, the flow proceeds to step S36. Further, in a case where the measured temperature T is not less than the first temperature threshold value T1, the flow proceeds to step S37.

In step S37, the operation mode determination unit 124 reads out the function of f (T) = a × f (H) from the humidity threshold value storage part 122 or the temperature threshold value storage unit 123 and determines whether or not f (T) ≥ a × f (H) on the basis of the measured relative humidity H and the measured temperature T. In a case where the result of determination is negative, the operation mode switching unit 125 outputs an activation command to the dehumidifier 21 (turning on the dehumidifier 21) (step S38). Further, in a case where the result of determination in step S37 satisfies an inequality of f (T) ≥ a × f (H), the operation mode switching unit 125 outputs an activation command to the dehumidifier 21 and the outside air introduction unit 18 (turning on the dehumidifier 21 and the outside air introduction unit 18) (step S39). Then, the flow returns to step S31.

On the other hand, after the operation mode switching unit 125 outputs the stop command to the dehumidifier 21 (turning off the dehumidifier 21) in step S36, the flow proceeds to step S40.

In step S40, the operation mode determination unit 124 reads out the first temperature threshold value T1 from the temperature threshold value storage unit 123 and compares the first temperature threshold value T1 with the measured temperature T. As the result of comparison, in a case where the measured temperature T is not less than the first temperature threshold value T1, the operation mode switching unit 125 outputs an activation command to the outside air introduction unit 18 (turning on the outside air introduction unit 18) (step S41). Then, the flow returns to step S31.

In a case where the measured temperature T is less than the first temperature threshold value T1, the flow proceeds to step S42 where the operation mode switching unit 125 outputs a stop command to the outside air introduction unit 18 (turning off the outside air introduction unit 18). Then, the flow returns to step S31.

As described above, the controller 12 switches among a first operation mode of activating the dehumidifier 21 and stopping the outside air introduction unit 18, a second operation mode of stopping the dehumidifier 21 and activating the outside air introduction unit 18, a third operation mode of activating both of the dehumidifier 21 and activating the outside air introduction unit 18, and the limitation of the power output or the load of the wind power generation plant 1 on the basis of the relative humidity and the temperature in the nacelle 8.

In this regard, in the present embodiment, by activating both of the dehumidifier 21 and the outside air introduction unit 18 in the third operation mode, the temperature in the nacelle 8 is increased due to the heat generated by activating the dehumidifier 21, but the nacelle 8 is ventilated and cooled by activating the outside air introduction unit 18, which can hence reduce an increase in the temperature in the nacelle 8. In this way, it is possible to optimally perform a humidity control and a temperature control in the nacelle 8.

According to the present embodiment, in addition to the effect of the embodiment 1, the humidity control and the temperature control in the nacelle 8 can be optimally performed by newly providing the third operation mode.

### [Embodiment 3]

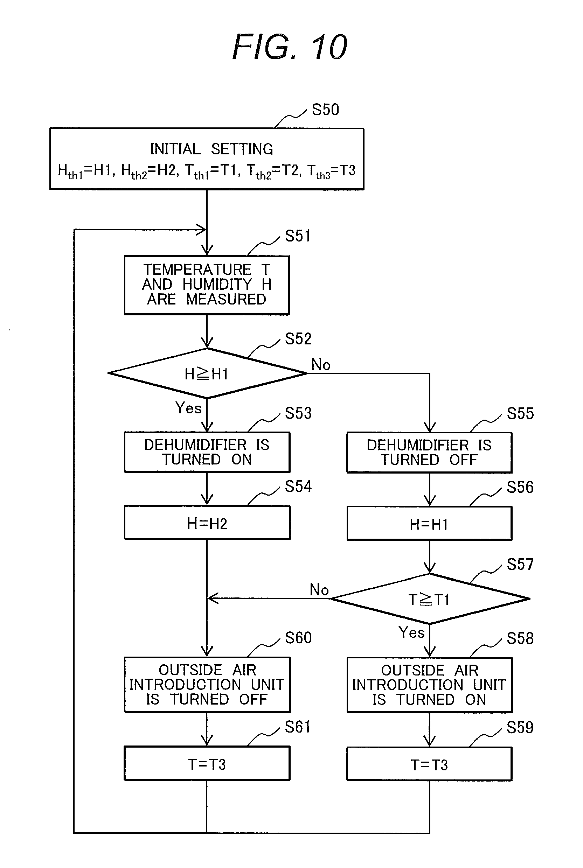

Fig. 10 is an operation control flow of a dehumidifier and an outside air introduction unit of a wind power generation plant of an embodiment 3 relating to other embodiment of the present invention. In the embodiment 1 and the embodiment 2, an operation control is performed by using one relative humidity H1 as the humidity threshold value and by using the first temperature threshold value T1 and the second temperature threshold value T2 as temperature threshold values (T1 < T2). In contrast to this, the present embodiment is different from the embodiment 1 and the embodiment 2 in that an operation control is performed by using a first relative humidity H1 and a second relative humidity H2 (H2 < H1) as humidity threshold values and by using not only a first temperature threshold value T1 and a second temperature threshold value T2 but also a third temperature threshold value T3 as temperature threshold values (T3 < T1 < T2). The present embodiment is the same as the embodiment 1 and the embodiment 2 in other constructions shown in Fig. 1 to Fig. 4, for example, the internal constructions of a wind power generation plant 1 and a nacelle 8 and hence their descriptions will be omitted in the following.

Hereinafter, the operation control by a controller 12 of the present embodiment will be described by the use of Fig. 10. First, an initial setting is performed: that is, the relative humidity H1 is set as a first humidity threshold value Hₜₕ₁; and the relative humidity H2 is set as a second humidity threshold value Hₜₕ₂; and the temperature T1 is set as a first temperature threshold value Tₜₕ₁; and the temperature T2 is set as a second temperature threshold value Tₜₕ₂; and the temperature T3 is set as a third temperature threshold value Tₜₕ₃ (step S50) . Here, the relative humidity H1, the first temperature threshold value T1 and the second temperature threshold value T2 are the same as the values in the embodiment 1 and the embodiment 2. The first relative humidity H1 and the second relative humidity H2 satisfy an inequality of H2 < H1. Further, the first temperature threshold value T1, the second temperature threshold value T2, and the third temperature threshold value T3 satisfy an inequality of T3 < T1 < T2. The set first relative humidity H1 and the set second relative humidity H2 are stored in a humidity threshold value storage unit 122. Further, the set first temperature threshold value T1, the set second temperature threshold value T2, and the set third temperature threshold value T3 are stored in a temperature threshold value storage unit 123.

Next, a temperature T in the nacelle 8 is measured by a temperature sensor 20 and a relative humidity H in the nacelle 8 is measured by a humidity sensor 19 (step S51). The measured temperature T and the measured relative humidity H are taken in the controller 12 by a temperature measured value input unit 120 and by a humidity measured value input unit 121, respectively. An operation mode determination unit 124 reads out the first relative humidity H1 from the humidity threshold value storage unit 122 and compares the first relative humidity H1 with the relative humidity H taken in by the humidity measured value input unit 121 (step S52). As the result of comparison, in a case where the measured relative humidity H is not less than the first relative humidity H1, an operation mode switching unit 125 outputs an activation command to a dehumidifier 21 (turning on the dehumidifier 21) (step S53). A relative humidity in the nacelle 8 is decreased along with time after the dehumidifier 21 is activated and hence is decreased to a value lower than the first relative humidity H1 compared in step S52. However, at this timing, the operation mode switching unit 125 does not immediately output an operation command to an outside air introduction unit 18. Thereafter, when it is detected by the operation mode determination unit 124 that the measured relative humidity H is equal to the second relative humidity H2 read out of the humidity threshold value storage unit 122 (step S54), the operation mode switching unit 125 outputs a stop command to the outside air introduction unit 18 (turning off the outside air introduction unit 18) (step S60).

On the other hand, when it is detected in step S52 by the operation mode determination unit 124 that the measured relative humidity H is less than the first relative humidity H1, the operation mode switching unit 125 outputs a stop command to the dehumidifier 21 (turning off the dehumidifier 21) (step S55). When the dehumidifier 21 is stopped, the relative humidity in the nacelle 8 is increased due to a relationship to an external environment, whereby it is detected by the operation mode determination unit 124 that the measured relative humidity H is equal to the first relative humidity H1 stored in the humidity threshold value storage unit 122 (step S56). Thereafter, the operation mode determination unit 124 compares the temperature T in the nacelle 8, which is measured, with the first temperature threshold value T1 read out of the temperature threshold value storage unit 123 (step S57). As the result of comparison, in a case where the measured temperature T is not less than the first temperature threshold value T1, the operation mode switching unit 125 outputs an activation command to the outside air introduction unit 18 (turning on the outside air introduction unit 18) (step S58). When the outside air introduction unit 18 is activated, the nacelle 8 is ventilated and cooled and hence the temperature in the nacelle 8 is gradually decreased, thereby being decreased to a value lower than the first temperature threshold value T1 compared in step S57. However, at this time, the operation mode switching unit 125 does not immediately output a stop command to the outside air introduction unit 18. Thereafter, when it is detected by the operation mode determination unit 124 that the temperature in the nacelle 8 is equal to the third temperature threshold value T3 (step S59), the flow returns to step S51.

Further, when the outside air introduction unit 18 is stopped in step S60, the nacelle 8 is not ventilated and cooled and hence the temperature in the nacelle 8 is gradually increased. In a case where it is detected by the operation mode determination unit 124 that the temperature T in the nacelle 8 is equal to the third temperature threshold value T3 (step S61), the flow returns to step S51.

Further, as the result of comparison by the operation mode determination unit 124 in step S57, in a case where the temperature T in the nacelle 8, which is measured, is less than the first temperature threshold value T1, the flow proceeds to step S60 where the operation mode switching unit 125 outputs a stop command to the outside air introduction unit 18 (turning off the outside air introduction unit 18). Thereafter, in a case where it is detected by the operation mode determination unit 124 that the temperature T in the nacelle 8 is equal to the third temperature threshold value T3 (step S61), the flow returns to step S51.

As described above, the outside air introduction unit 18 is activated in a case where the temperature T in the nacelle 8 is not less than the first temperature threshold value T1. The outside air introduction unit 18 is operated until the temperature T in the nacelle 8 is decreased to a value less than the third temperature threshold value T3 and then is stopped. Further, the dehumidifier 21 is activated in a case where the relative humidity H in the nacelle 8 is not less than the first relative humidity threshold value H1. The dehumidifier 21 is operated until the relative humidity H in the nacelle 8 is decreased to a value less than the second relative humidity H2 and then is stopped.

In this way, the values (the first relative humidity H1, the first temperature threshold value T1) at which the dehumidifier 21 and the outside air introduction unit 18 are activated are separated from the values (the second relative humidity H2, the third temperature threshold value T3) at which the dehumidifier 21 and the outside air introduction unit 18 are stopped, and the values at which the dehumidifier 21 and the outside air introduction unit 18 are stopped are made lower than the values at which the dehumidifier 21 and the outside air introduction unit 18 are activated. In this way, it is possible to avoid the dehumidifier 21 and the outside air introduction unit 18 from being activated or stopped frequently at subtly different values. Hence, it can be expected to appropriately hold the temperature and the humidity in the nacelle 8 within specified ranges and at the same time to inhibit the risk of failure of the dehumidifier 21 and the outside air introduction unit 18.

Here, it is desirable in terms of inhibiting the corrosion risk of the units and in terms of inhibiting power consumed by an excessive dehumidifying operation that the first relative humidity H1 of the first humidity threshold value, as is the case with the embodiment 1, are set within a range from 50 % to 60 % and that the second relative humidity H2 is set within a range from 40 % to 50 %. Further, it is desirable that the first temperature threshold value T1, as is the case with the embodiment 1, is set within a range from 40 °C to 50 °C and that the third temperature threshold value T3 is set within a range from 35 °C to 40 °C. However, depending on an environment in which the wind power generation plant 1 is installed, there exist various environments of high temperature and high humidity or of low temperature and low humidity, so that it is recommended that the first relative humidity H1 and the second relative humidity H2 as the humidity threshold values, the first temperature threshold value T1, the second temperature threshold value T2, and the third temperature threshold T3 are appropriately set in consideration of the state of the environment in which the wind power generation plant 1 is installed. In this regard, it is recommended that the second temperature threshold value T2 is set in the same way as the embodiment 1. Here, in the present embodiment, a step of limiting the power output or the load by the use of the second temperature threshold value T2 (degraded operation) is omitted, but the step may be included as shown in Fig. 7 or Fig. 9.

According to the present embodiment, it is possible not only to produce the effect of the embodiment 1 but also to inhibit an excessive switching of the operation mode.

### [Embodiment 4]

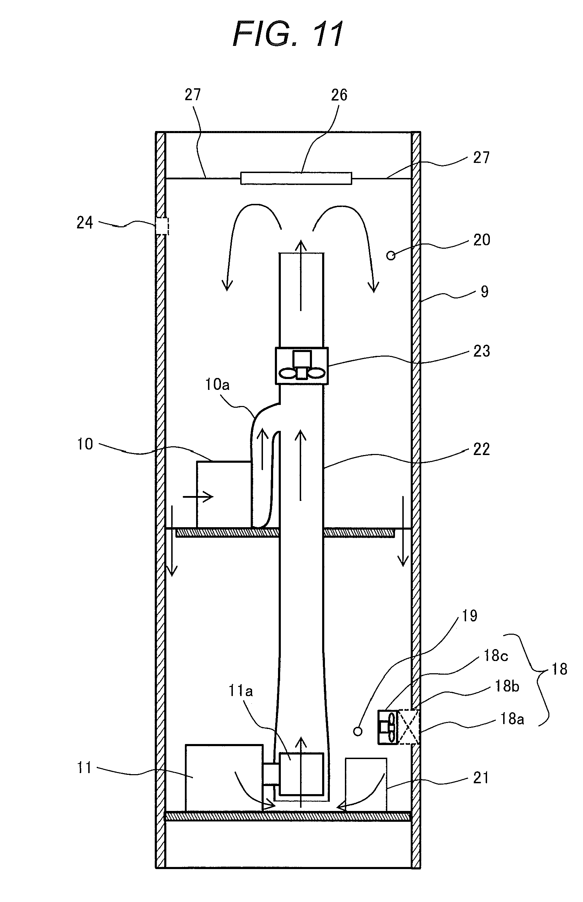

Fig. 11 is a schematic longitudinal section view of a tower part of a wind power generation plant of an embodiment 4 relating to other embodiment of the present invention. The embodiments 1 to 3 employ a construction in which the outside air introduction unit 18, the dehumidifier 21, and the controller 12 are arranged in the nacelle 8. The present embodiment is different from the embodiments 1 to 3 in that an outside air introduction unit 18 and a dehumidifier 21 are arranged in a tower 9.

In Fig. 11, the tower 9 has a power converter 10, a transformer 11, and a power cable (not shown in the drawing) received therein. In order to supply power generated by a wind power generation plant 1 to a power system, the power converter 10 rectifies the power and the transformer 11 regulates voltage. When the wind power generation plant 1 is operated to generate the power, the wind power generation plant 1 produces heat due to the loss of these units and hence needs a mechanism for cooling these units. Here, there will be shown an example in which the wind power generation plant 1 is provided with units for circulating air in the tower 9, for example, a cylindrical duct 22 and a second electric fan 23 are arranged in order to cool the power converter 10 and the transformer 11.

As shown in Fig. 11, the tower 9 has a duct 22 arranged therein and the duct 22 circulates air in a vertical direction and is shaped like, for example, a cylinder, and has the second electric fan 23 set therein. A heat radiating plate 11a, which is set in the transformer 11 arranged in a lower portion of the tower 9, is received in a lower end portion of the duct 22. When the second electric fan 23 is driven, the second electric fan 23 brings an air flow into contact with the heat radiating plate 11a to thereby cool the air flow. Further, the duct 22 is connected to an air passage 10a of the power converter 10 at a higher portion thereof. A connection part in which the duct 22 is connected to the air passage 10a is positioned below the second electric fan 23 set in the duct 22. In this way, an air flow cooling a power semiconductor element, for example, an IGBT for constructing the power converter 10 meets an air flow flowing in the duct 22 from below to above via the connection part.

A flow straightening plate 26 is arranged at a position separated a specified distance from an opening portion formed in an upper end of the duct 22. The flow straightening plate 26 has its plane shape formed, for example, in the shape of a circular disc or a rectangle and has a size capable of covering the openingportion formed in the upper end of the duct 22 opposite thereto. The flow straightening plate 26 has its one end fixed to an inner wall of the tower 9 and has the other end supported by a flow straightening plate support member 27 connected to an outer peripheral portion or an outer edge portion of the flow straightening plate 26. When the second electric fan 23 is driven, the air flow, which flows out of the opening portion formed in the upper end of the duct 22 and is brought into high temperature, collides with the flow straightening plate 26 and has a direction of flow deflected toward an inner wall face of the tower 9. Then, the air flow of high temperature goes down along the inner wall face of the tower 9. The air flow, which goes down and is of high temperature, radiates heat to the outside air via a wall surface of the tower 9.

Further, the tower 9 has an outside air introduction port 18a formed in a lower portion thereof, the outside air introduction port 18a tanking in air outside the wind power generation plant 1. The outside air introduction port 18a constructs an outside air introduction unit 18 together with a salt damage prevention filter 18b for removing salinity and with a first electric fan 18c. Near the outside air introduction unit 18 are set a humidity sensor 19 and a dehumidifier 21, and in an upper portion of the tower 9 is set a temperature sensor 20. Further, the air flow introduced by the outside air introduction unit 18 is made to flow in the duct 22 and is circulated in the tower 9. The tower 9 has an air outlet 24 formed in an upper wall face thereof and the air flow supplied for ventilating and cooling the power converter 10 and the transformer 11 is discharged to the outside of the tower 9 from the air outlet 24.

In Fig. 11, a controller 12 is omitted. However, the controller 12 is set, for example, on a floor on which the dehumidifier 21 is set or on a floor on which the power converter 10 is set. An operation control of the dehumidifier 21 and the outside air introduction unit 18 by the controller 12 on the basis of temperature and relative humidity in the tower 9, which are measured by the temperature sensor 20 and the humidity sensor 19, is performed in the same way as in any one of the embodiments 1 to 3, so the description of the operation control will be omitted here.

In the embodiments 1 to 3, an object whose internal air quality is controlled is made the nacelle 8 but, in the present embodiment, an object whose internal air quality is controlled is made the tower 9. An air flow in the tower 9 is basically of a circulation type in which: the air flow flows upward from the lower portion of the tower 9 to the upper portion of the tower 9 via the duct 22; then is turned back by the flow straightening plate 26; and goes down along the inner wall of the tower 9, so that a part of the air flow is replaced by the outside air introduced at a low temperature. As is the case with the embodiments 1 to 3, the outside air to be introduced is likely to be of high humidity, so an operation control of the dehumidifier 21 is performed on the basis of a value of a relative humidity of the outside air, which is measured by the humidity sensor 19 immediately after the outside air is introduced into the tower 9, to thereby keep the interior of the tower 9 at a low humidity. When the temperature sensor 20 is set near the transformer 11 and the power converter 10, which are heating units, or on the downstream side in the duct 22 of them (upper side in Fig. 11), the temperature sensor 20 can measure the temperature in the tower 9 on a safety side for a purpose of avoiding an abnormal operation and a damage of the units caused by high temperature. In many cases, a door (not shown in the drawing) through which a worker comes in or out for a maintenance work or the like is formed in the lower portion of the tower 9. Hence, from the viewpoint of protecting a working environment, the temperature sensor 20 may be alternatively set to measure the temperature just before a place in which air going down while radiating heat to the outside from the upper portion of the tower 9 meets the outside air from the door or the outside air introduction unit 18.

According to the construction and the operation control described above, a highly efficient control of the air quality (temperature, humidity) achieved for the nacelle 8 in the embodiments 1 to 3 can be achieved also in the tower 9.

According to the present embodiment, by switching between the first operation mode and the second operation mode on the basis of the relative humidity and the temperature which are measured in the tower 9, as is the case with the embodiment 1, a humidity control and a temperature control in the tower 9 constructing the wind power generation plant 1 can be efficiently performed. Further, it is possible to inhibit a corrosion risk of the units of the power converter 10 and the transformer 11 arranged in the tower 9.

Further, according to the present embodiment, by controlling the operation of the outside air introduction unit 18 and the dehumidifier 21, which are arranged in the tower 9, in the same way as the embodiment 3, it is possible to inhibit an excessive switching of the operation mode.

### [Embodiment 5]

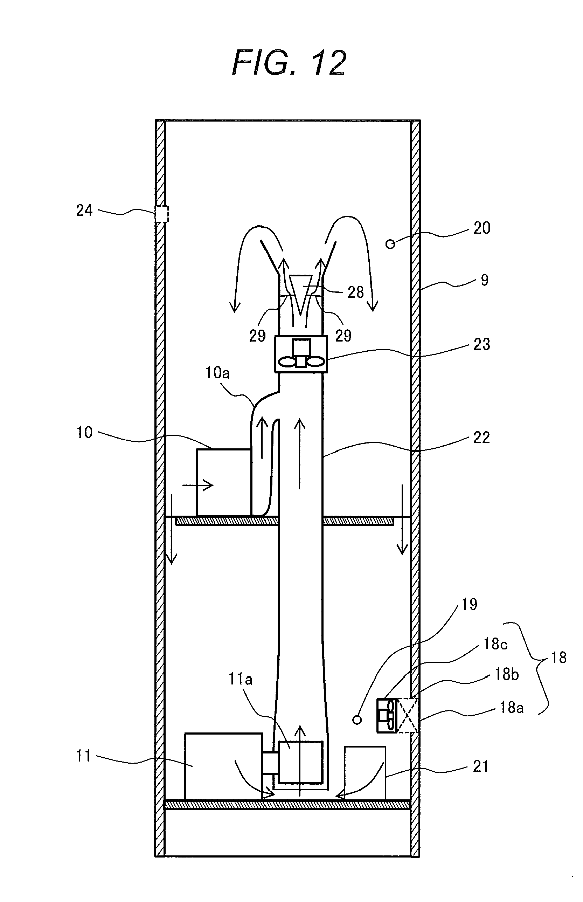

Fig. 12 is a schematic longitudinal section view of a tower part of a wind power generation plant of an embodiment 5 relating to other embodiment of the present invention. The embodiment 4 employs a construction in which the flow straightening plate 26 is arranged in such a way as to oppose the opening portion of the upper end of the duct 22. The present embodiment is different from the embodiment 4 in that an opening portion of an upper end of a duct 22 is formed in the shape of a bugle and that a diffuser 28 is arranged above a second electric fan 23 in the duct 22. An arrangement of other units such as an outside air introduction unit 18, a dehumidifier 21, a power converter 10, and a transformer 11, which are arranged in a tower 9, is the same as the embodiment 4.

As shown in Fig. 12, the diffuser 28, which is formed in a conical hollow body facing down or is formed in the shape of a cone, is arranged in an upper portion of the cylindrical duct 22 and above the second electric fan 23. The diffuser 28 has its one end fixed to an inner wall face of the duct 22 and has the other end fixed to a diffuser support member 29 fixed to an outer peripheral face of the diffuser 28. For example, three bar-shaped diffuser support members 29 are arranged at an interval of 120° in the cylindrical duct 22 and support the diffuser 28 at three points. In this regard, the diffuser 28 does not necessarily need to be supported at three points but may be supported at four or more points. However, it is desirable in terms of reducing a flow resistance to an air flow flowing upward in the duct 22 that the number of the diffuser support members 29 to be used is reduced as much as possible.

Further, as shown in Fig. 12, the duct 22 above an upper end portion of the diffuser 28 is formed in the shape of a bugle whose opening diameter becomes larger toward its upper tip. In this way, an air flow flowing upward from a lower portion of the duct 22 meet air, which flows into the duct 22 via an air passage 10a and cools the power converter 10, and then flows upward in the duct 22 from the second electric fan 23. The air flow after passing through the second electric fan 23 flows along an outer peripheral face of the diffuser 28. That is, the air flow flows on the inner wall face side in the duct 22, then flows along an inner wall face of the duct 22 formed in the shape of the bugle whose opening diameter becomes larger toward its upper tip, and flows out of an opening portion of an upper end of the duct 22. The air flow which flows out of the opening portion of the upper end of the duct 22 and which is brought into high temperature flows to an inner wall face of the tower 9 and flows down along the inner wall face of the tower 9. The air flow, which goes down and is of high temperature, goes down in the tower 9 while radiating heat to the outside air via a wall face of the tower 9. In the present embodiment, other constructions are the same as the embodiment 4, so their descriptions will be omitted.

According to the present embodiment, as compared with the embodiment 4, when the high-temperature air flow flowing out of the upper end portion of the duct 22 is circulated in the tower 9, it is not necessary to make the high-temperature air flow collide with the flow straightening plate 26, as is required in the embodiment 4. Hence, a circulation flow in the tower 9 can be formed by a comparatively moderate whirl flow.

Further, according to the present embodiment, the same effect as the embodiment 4 can be achieved.

Up to this point, the embodiments of the present invention have been described, but the embodiments described above are only examples and never limit the present invention. For example, as the objects to be cooled have been described the generator 7, the power converter 10, and the transformer 11, but the objects to be cooled are not limited to these units. When the operation control of the outside air introduction unit 18 and the dehumidifier 21 is performed in the same way as described above, a desired effect can be produced, and to perform the operation control of the outside air introduction unit 18 and the dehumidifier 21 in the same way as described above is within a scope intended by the present invention.

In this regard, the present invention is not limited to the embodiments described above but includes various modified embodiments. For example, the above-mentioned embodiments have been described in detail in order to explain the present invention in an easily understandable manner. The present invention does not necessarily need to include all constructions described in the above-mentioned embodiments. Further, it is also possible to replace a part of the construction of one embodiment with the construction of the other embodiment. Still further, it is also possible to add the construction of one embodiment to the construction of the other embodiment. Still further, it is also possible to add, remove, or replace the construction of one embodiment to, from, and with a part of the construction of each of the embodiments.

### REFERENCE SIGNS LIST

1: wind power generation plant
2: blade
3: rotor
4: main shaft
5: speed-increasing gear
6: high-speed shaft
7: generator
8: nacelle
9: tower
10: power converter
10a: air passage
11:transformer
11a: heat radiating plate
12: controller
13: foundation
14: sea level
15: radiator
16: radiator air inlet
17: radiator air outlet
18: outside air introduction unit
18a: outside air introduction port
18b: salt damage prevention filter
18c: first electric fan
19: humidity sensor
20: temperature sensor
21: dehumidifier
22: duct
23: second electric fan
24: tower air outlet
25: passage wall
26: flow straightening plate
27: flow straightening plate support member
28: diffuser
29: diffuser support member
120: humidity measured value input unit
121: temperature measured value input unit
122: humidity threshold value storage unit
123: temperature threshold value storage unit
124: operation mode determination unit
125: operation mode switching unit
126: internal bus

## Claims

1. A wind power generation plant (1) including a blade (2) that receives wind and is rotated thereby, a generator (7) for generating electric power by the rotation of the blade (2), a nacelle (8) for supporting the blade (2) and for receiving the generator (7), and a tower (9) for supporting the nacelle (8) in such a way that the nacelle (8) can turn, the wind power generation plant (1) comprising:
an outside air introduction unit (18) for introducing outside air;
a dehumidifier (21);
a temperature sensor (20);
a humidity sensor (19) for measuring a relative humidity; and
a controller (12) for holding a temperature threshold value and a relative humidity threshold value which are set in advance,
wherein the controller (12) switches between a first operation mode and a second operation mode on the basis of temperature and relative humidity, which are measured in the wind power generation plant (1), and the temperature threshold value and the relative humidity threshold value, the first operation mode activating the dehumidifier (21) or subjecting the dehumidifier (21) to a high function operation and stopping the outside air introduction unit (18) or subjecting the outside air introduction unit (18) to a low function operation, the second operation mode stopping the dehumidifier (21) or subjecting the dehumidifier (21) to the low function operation and activating the outside air introduction unit (18) or subjecting the outside air introduction unit (18) to the high function operation.

2. The wind power generation plant (1) according to claim 1,
wherein in a case where the relative humidity, which is measured, is not less than the relative humidity threshold value, the controller (12) sets the first operation mode, and wherein in a case where the relative humidity, which is measured, is less than the relative humidity threshold value and where the temperature, which is measured, is not less than the temperature thresholdvalue, the controller (12) sets the second operation mode.

3. The wind power generation plant (1) according to claim 2,
wherein the temperature threshold value includes a first temperature threshold value and a second temperature threshold value higher than the first temperature threshold value, wherein in a case where the relative humidity, which is measured, is less than the relative humidity threshold value and where the temperature, which is measured, is not less than the first temperature threshold value and less than the second temperature threshold value, the controller (12) sets the second operation mode, and
wherein in a case where the temperature, which is measured, is not less than the second temperature threshold value, the controller (12) regulates a pitch angle of the blade (2) to reduce a rotational speed of the blade (2).

4. The wind power generation plant (1) according to claim 2,
wherein in a case where the relative humidity, which is measured, is not less than the relative humidity threshold value and where the temperature, which is measured, is not less than the temperature threshold value and where an increase in the temperature, which is measured, is larger than an increase in the relative humidity which is measured, the controller (12) sets a third operation mode of activating the dehumidifier (21) or subjecting the dehumidifier (21) to the high function operation and of activating the outside air introduction unit (18) or subjecting the outside air introduction unit (18) to the high function operation.

5. The wind power generation plant (1) according to claim 2,
wherein the humidity threshold value includes a first humidity threshold value and a second humidity threshold value lower than the first humidity threshold value,
wherein in a case where the relative humidity, which is measured, is not less than the first relative humidity threshold value, the controller (12) sets the first operation mode of activating the dehumidifier (21) or subjecting the dehumidifier (21) to the high function operation and of stopping the outside air introduction unit (18) or subjecting the outside air introduction unit (18) to the low function operation when the relative humidity, which is measured thereafter, reaches the second relative humidity threshold value.

6. The wind power generation plant (1) according to any one of claims 2 to 5,
wherein the outside air introduction unit (18), the dehumidifier (21), the temperature sensor (20), the humidity sensor (19), and the controller (12) are arranged in the nacelle (8).

7. The wind power generation plant (1) according to any one of claims 2 to 5,
wherein the outside air introduction unit (18), the dehumidifier (21), the temperature sensor (20), the humidity sensor (19), and the controller (12) are arranged in the tower (9).

8. The wind power generation plant (1) according to any one of claims 2 to 4,
wherein the relative humidity threshold value is set within a range from 50 % to 60 %.

9. The wind power generation plant (1) according to claim 1 or claim 2,
wherein the temperature threshold value is set within a range from 40 °C to 50 °C.

10. The wind power generation plant (1) according to any one of claims 1 to 5,
wherein the high function operation is not less than approximately 70 % of a rated value, and
wherein the low function operation is less than 50 % of the rated value.

11. The wind power generation plant (1) according to claim 6,
wherein the outside air introduction unit (18) includes an outside air introduction port (18a), a filter (18b) for removing salinity from outside air introduced from the outside air introduction port (18a), and an electric fan (18c) for introducing the outside air passing through the filter (18b) into the nacelle (8), and
wherein the outside air introduction unit (18), the humidity sensor (19), the dehumidifier (21), the generator (7), the controller (12), and the temperature sensor (20) are arranged in this order from an upstream side with respect to an outside air flow flowing in from the outside air introduction unit (18).

12. The wind power generation plant (1) according to claim 7, further comprising:
a cylindrical duct (22) for air-cooling a transformer (11) and a power converter (10), which are arranged in the tower (9), and
a flow straightening plate (26) arranged at a position separated a specified distance upward from an opening portion of an upper end of the duct (22) and for directing an air flow flowing out of the opening portion downward along an inner wall of the tower (9).

13. The wind power generation plant (1) according to claim 7, further comprising:
a cylindrical duct (22) for air-cooling a transformer (11) and a power converter (10), which are arranged in the tower (9), and
a diffuser (28) arranged in the duct (22) and in an upper portion of the duct (22) and formed of a conical hollow body, wherein the duct (22) above the diffuser (28) is formed in a shape in which an opening diameter of the duct (22) increases toward an upper tip of the duct (22), and
wherein the diffuser (28) is supported by a plurality of support members (29) each of which has one end fixed to an inner wall of the duct (22) and has other end fixed to an outer peripheral face of the diffuser (28).
